# EUROPÄISCHE PATENTANMELDUNG

(11) **EP 2 863 012 A1**
(43) Veröffentlichungstag der Anmeldung: **22.04.2015**
(21) Anmeldenummer: 13189347.1
(22) Anmeldetag: 18.10.2013
(51) Int. Cl.: F01D 5/18, F01D 5/20

(54) **Turbinenschaufel mit Lamellenstruktur und Verfahren zur Herstellung**

(71) Anmelder: Siemens Aktiengesellschaft, 80333 München (DE)
(72) Erfinder: Arjakine, Nikolai, 10555 Berlin (DE); Burbaum, Bernd, 14612 Falkensee (DE); Laux, Britta, 14059 Berlin (DE); Malow, Thomas, 14129 Berlin (DE); Piegert, Sebastian, 10777 Berlin (DE)

(57) **Zusammenfassung**

Eine Turbinenschaufel (120, 130) mit einem Kronenboden (16) kann bezüglich ihrer Betriebsbeanspruchung dadurch verbessert werden, wenn sie eine Lamellenstruktur aufweist, die durch Schlitze (10) in der freistehenden, äußeren Wand (7) gegeben sind, so dass kritische Spannungen zwischen Boden (4) und der Ende (13) der Wand (13) vermieden werden.

## Beschreibung

Die Erfindung betrifft die besondere geometrische Gestaltung einer Spitze einer Turbinenschaufel in Form einer Lamellenstruktur und Verfahren zur Herstellung.

Turbinenschaufeln, insbesondere Laufschaufeln, weisen einen sogenannten Kronenboden auf, bei dem eine umlaufende, freistehende Wand am Ende einer Turbinenschaufel vorhanden ist.

Aufgrund des Temperaturunterschiedes zwischen der Spitze einer Turbinenschaufel und dem Boden, der bis zu 150K betragen kann, kann es während des Einsatzes zu thermomechanischen Spannungen kommen und somit zur möglichen Rissbildung in der Anstreifkante.

Es ist daher Aufgabe der Erfindung oben genanntes Problem zu lösen.

Die Aufgabe wird gelöst durch eine Turbinenschaufel gemäß Anspruch 1 und ein Verfahren gemäß Anspruch 11 oder 12.

In den Unteransprüchen sind weitere vorteilhafte Maßnahmen aufgelistet, die beliebig miteinander kombiniert werden können, um weitere Vorteile zu erzielen.

Der Vorteil der Erfindung liegt in der Verbesserung der Hochtemperatureigenschaften und einer längeren Lebensdauer der Turbinenschaufel.

Es zeigen:
- Figur 1: schematisch die Spitze einer solchen Turbinen schaufel mit einer Lamellenstruktur,
- Figur 2, 3: weitere Ausgestaltungen eines Schlitzes einer Lamellenstruktur,
- Figur 4: eine Turbinenschaufel.

Die Beschreibung und die Figuren stellen nur Ausführungsbeispiele der Erfindung dar.

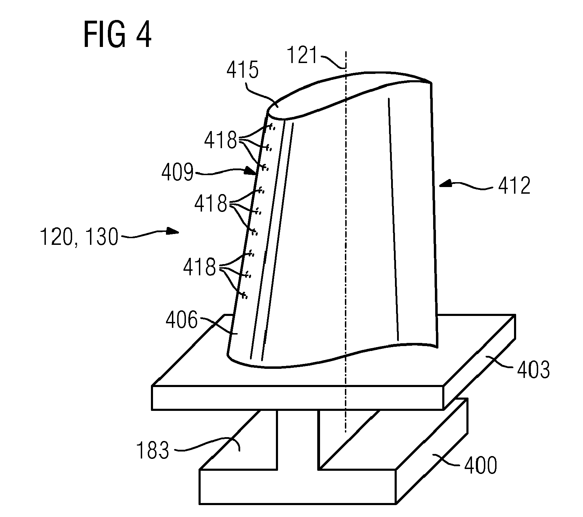

Das Ende einer Turbinenschaufel 1, 120, 130 weist einen Kronenboden 16 mit einer freistehenden, äußeren Wand 7 auf, die einen Boden 4 umschließt und deren Ende ein freies Ende 13 bei einer Turbinenschaufel 120, 130 (Fig. 4) bildet.

Vorzugsweise stellt dies eine Laufschaufel 120 dar.

Die freistehende, äußere Wand 7 ist entsprechend der Form des Schaufelblatts (406, Fig. 4) der Turbinenschaufel 1, 120, 130 ausgebildet und weist dementsprechend eine Anströmkante 409 (Fig. 4) und eine Abströmkante 412 (Fig. 4) vorzugsweise mit einem Lüftungsschlitz 50 im Bereich der Abströmkante 412 auf, d.h. die freistehende, äußere Wand 7 ist nicht vollständig umlaufend.

In die freistehende, äußere Wand 7 sind erfindungsgemäß Schlitze 10 eingebracht, die sich vorzugsweise über die gesamte Länge der freistehenden, äußeren Wand 7 erstrecken. Ein Schlitz 10 geht durch die gesamte Dicke der Wand 7 hindurch.

Die Schlitze 10 sind vorzugsweise gleichmäßig verteilt über die Länge der freistehenden, äußeren Wand 7 und/oder weisen insbesondere einen gleichen Abstand auf. Mit Abstand ist die Distanz der direkt benachbarten Schlitze 10 entlang der freistehenden, äußeren Wand 7 gemeint.

Die Schlitze 10 verlaufen vorzugsweise parallel zueinander.

Vorzugsweise können sich die Schlitze 10 zum Ende 13 der freistehenden, äußeren Wand 7 hin im Querschnitt vergrößern, insbesondere keilförmig ausgebildet sein.

Die Schlitze 10, insbesondere alle Schlitze 10 erstrecken sich in der Wand 7 ausgehend vom Ende 13, vorzugsweise nicht bis zur Tiefe des Bodens 4, sondern insbesondere nur maximal bis 75%, ganz insbesondere bis maximal 50% der Höhe der freistehenden, äußeren Wand 7.

Die Schlitze 10 sind deutlich dünner ausgebildet als der Abstand der direkt benachbarten Schlitze 10 und haben eine Lamellenbreite a von vorzugsweise 2mm ±10%, wobei die Schlitze 10 im Bereich der Spitze 13 vorzugsweise eine Spaltbreite b von vorzugsweise 0,1mm ±10% bei Raumtemperatur aufweisen.

Der Kronenboden 16 mit den Schlitzen 10 kann beschichtet sein. Dies erfolgt insbesondere durch ein Gasphasenverfahren.

Während der Betriebsbeanspruchung werden die Schlitze 10 aufgrund der Wärmeausdehnung weitgehend oder vollständig geschlossen und es entstehen auch keine Leckageverluste des Heißgasstroms im Bereich des Endes 13. Ebenso werden kritische Spannungen aufgrund des Temperaturunterschiedes vermieden.

Die Spaltbreite b ist abhängig vom Temperaturunterschied zwischen dem Ende 13 und dem Boden 4, von der Lamellenbreite a und/oder vom Material der Turbinenschaufel 120, 130.

Die Schlitze 10 werden vorzugsweise durch Drahterodieren oder Laserstrahlung in die Wand 7 eingebracht.

Im Reparaturfall, bei dem der Kronenboden 16 und/oder die Wand 7 mit dem Ende 13 neu aufgebaut wird, können durch entsprechende Steuerung, vorzugsweise beim Laserauftragsschweißen, die Schlitze 10 beim Neuaufbau direkt mit erzeugt werden.

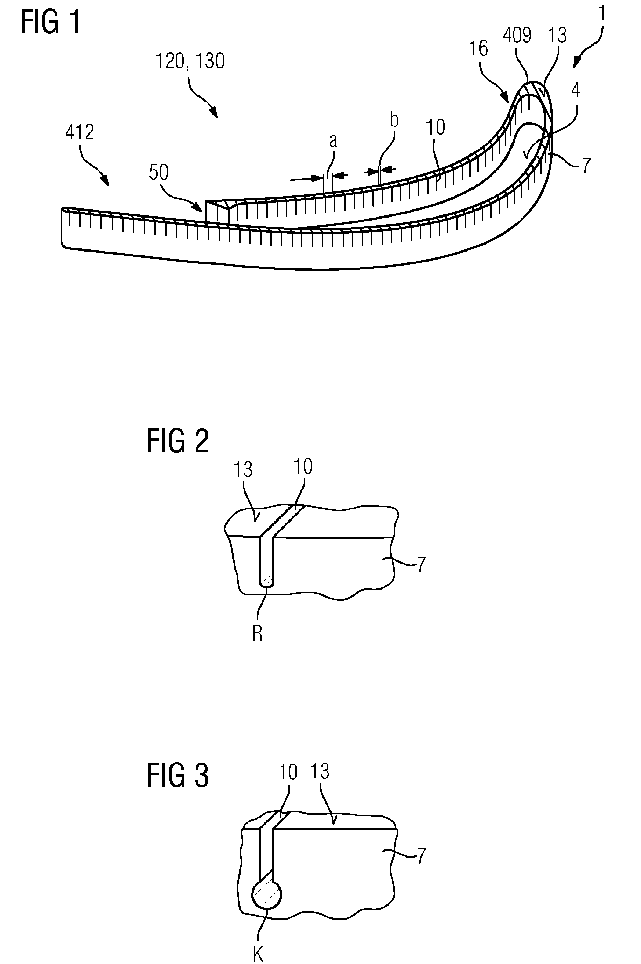

Figur 2 zeigt einen Schlitz 10 in näherer Darstellung. Der Rundboden R des Schlitzes 10 ist rund ausgeführt. Die Rundung des Rundbodens R ist nicht breiter als die Spaltenbreite b des Schlitzes 10. Dadurch werden kritische Spannungen in Ecken oder Kanten vermieden.

In Figur 3 ist ein weiteres Ausführungsbeispiel eines Schlitzes 10 dargestellt, der an seinem Kreisboden K eine kreisförmige Form aufweist, wobei der Durchmesser des Kreisbodens K größer ist als die Spaltbreite b am Ende des Schlitzes 10. Dadurch werden kritische Spannungen in Ecken oder Kanten vermieden.

Die Figur 4 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAIX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrA1X-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Turbinenschaufel (1, 120, 130),
die einen Kronenboden (16) mit einer freistehenden, äußeren Wand (7) aufweist,
die einen Boden (4) umschließt,
wobei mehrere Schlitze (10) in der freistehenden, äußeren Wand (7) vorhanden sind.

2. Turbinenschaufel nach Anspruch 1,
bei dem fast alle,
insbesondere alle,
Schlitze (10) über die gesamte Länge der freistehenden, äußeren Wand (7) verteilt sind,
insbesondere gleichmäßig verteilt sind,
ganz insbesondere die gleiche Lamellenbreite (a) aufweisen.

3. Turbinenschaufel nach einem oder beiden der Ansprüche 1 oder 2,
**dadurch gekennzeichnet,**
**dass** sie eine Laufschaufel (120) ist.

4. Turbinenschaufel nach einem oder mehreren der vorherigen Ansprüche 1, 2 oder 3,
bei dem die Schlitze (10),
insbesondere alle Schlitze (10),
zum freien Ende (13) der Wand (7) hin breiter ausgebildet sind,
insbesondere keilförmig ausgebildet sind.

5. Turbinenschaufel nach einem oder mehreren der vorherigen Ansprüche 1 bis 4,
bei dem die Schlitze (10) dünner ausgebildet sind als der Abstand von Schlitzen (10) direkt nebeneinander, insbesondere bei dem die direkt benachbarten Schlitze (10) eine Lamellenbreite (a) von vorzugsweise 2mm ±10% aufweisen,
ganz vorzugsweise von 2mm.

6. Turbinenschaufel nach einem oder mehreren der vorherigen Ansprüche 1 bis 5,
bei dem die Schlitze (10) bei Raumtemperatur an ihrem freien Ende (13) eine Spaltbreite (b) von 0,1mm ±10% aufweisen,
insbesondere von 0,1mm.

7. Turbinenschaufel nach einem oder mehreren der vorherigen Ansprüche,
bei dem die Schlitze (10),
insbesondere alle Schlitze (10),
sich in der freistehenden, äußeren Wand (7) ausgehend vom Ende (13) der Wand nicht bis zur Tiefe des Bodens (4) erstrecken,
insbesondere nur maximal bis 75%,
ganz insbesondere bis maximal 50% der Höhe der freistehenden, äußeren Wand (7).

8. Turbinenschaufel nach einem oder mehreren der vorherigen Ansprüche,
bei dem die Schlitze (10) parallel zueinander verlaufen, insbesondere alle Schlitze (10) parallel zueinander verlaufen.

9. Turbinenschaufel nach einem oder mehreren der vorherigen Ansprüche 1 bis 8,
bei dem der Rundboden (R) des Schlitzes (10),
insbesondere aller Schlitze (10),
rund ausgebildet ist.

10. Turbinenschaufel nach einem oder mehreren der vorherigen Ansprüche 1 bis 8,
bei dem der Kreisboden (K) des Schlitzes (10), insbesondere aller Schlitze (10),
kreisförmig ausgebildet ist,
wobei der Durchmesser des Kreisbodens (K) größer ist als die Spaltbreite (b) des Schlitzes (10).

11. Verfahren zur Erstellung einer Turbinenschaufel insbesondere nach einem oder mehreren der vorherigen Ansprüche 1 bis 10,
mit einer Lamellenstruktur im Bereich des freien Endes (13) einer freistehenden, äußeren Wand (7),
bei dem durch Drahterodieren oder Laserbehandlung Schlitze (10) in eine freistehende, äußere Wand (7) eines Kronenbodens (16) eingebracht werden.

12. Verfahren zur Wiederherstellung einer Turbinenschaufel mit einer Lamellenstruktur,
bei dem beim Wiederaufbau einer freistehenden, äußeren Wand (7) auf einem Boden (4) durch Auftrag von Material Schlitze (10) für eine freistehende, äußere Wand (7) durch Nichtauftrag von Material im Bereich der herzustellenden Schlitze (10) erzeugt werden.
